# EUROPEAN PATENT SPECIFICATION

(11) **EP 2 288 810 B1**
(45) Date of publication and mention of the grant of the patent: **06.04.2016**
(21) Application number: 09731832.3
(22) Date of filing: 13.04.2009
(51) Int. Cl.: F01K 7/40, F01K 17/02, F24J 2/07, F22B 1/00, F22B 37/26, F24J 2/10

(54) **SOLAR THERMAL POWER PLANT**
SOLARTHERMISCHES KRAFTWERK
CENTRALE THERMIQUE À ÉNERGIE SOLAIRE

(30) Priority: 16.04.2008 US 45361 P; 30.05.2008 US 57360 P; 09.04.2009 US 421024; 09.04.2009 US 421047
(43) Date of publication of application: 02.03.2011
(73) Proprietor: ALSTOM Technology Ltd, 5400 Baden (CH)
(72) Inventor: PALKES, Mark, Glastonbury CT 06033 (US)
(74) Representative: General Electric Technology GmbH
(86) International application number: PCT/US2009/040326
(87) International publication number: WO 2009/129166

(56) References cited:
- DE-C1- 10 128 562
- US-A- 4 069 674
- MULLER M ET AL: "KREISPROZESSSCHALTUNGEN FUR PARABOLRINNEN-SOLARKRAFTWERKE MIT DIREKTER DAMPFERZEUGUNG IM SOLARFELD" BWK BRENNSTOFF WARME KRAFT, SPRINGER VDI VERLAG, DUSSELDORF, DE, vol. 44, no. 10, 1 October 1992 (1992-10-01), pages 463-468, XP000540018 ISSN: 1618-193X
- KAUSHIK S C ET AL: "SECOND LAW ANALYSIS OF A SOLAR THERMAL POWER SYSTEM" INTERNATIONAL JOURNAL OF SOLAR ENERGY, HARWOOD ACADEMIC PUBLISHERS, LONDON, GB, vol. 20, no. 4, 1 January 2000 (2000-01-01), pages 239-253, XP000967618 ISSN: 0142-5919
- MARKO A: "VERBESSERUNG FOSSILGEFEUERTER DAMPFKRAFTWERKE DURCH SOLARE WAERMEZUFUHR" BWK BRENNSTOFF WARME KRAFT, SPRINGER VDI VERLAG, DUSSELDORF, DE, vol. 47, no. 7/08, 1 July 1995 (1995-07-01), pages 303-308, XP000520839 ISSN: 1618-193X

## Description

### TECHNICAL FIELD

The present disclosure relates generally to a solar thermal power plant, and more particularly, to a solar thermal power plant having a plurality of preheaters utilizing steam extracted from a steam turbine to improve steam generation efficiency within the power plant.

### BACKGROUND

In conventional power plants, fossil fuels are typically burned to generate steam, which is used to drive power-generating devices. In such plants, water is fed to a boiler using the fossil fuels to heat the water and generate steam. The steam is then used to drive turbine generators that generate electricity. In order to increase the efficiency of the process of turning the water into steam, the water is often preheated as it is fed to the boiler. It is common practice to pass this feedwater stream through a preheating unit, such as an economizer, to primarily cool the flue gases flowing to an air preheater as well as raise the temperature of the feedwater before being fed into the boiler. In order to sufficiently cool the flue gases, the temperature of the feedwater entering the economizer must be limited to a relatively low temperature.

In conventional thermal solar power plants, solar receivers include panels of tubes that function as an economizer by heating the working fluid flowing through the solar receiver. Such conventional thermal solar power plants are disclosed in German Patent Document DE 101 28 562, a document entitled "Circulating Process Circuits for Parabolic Trough Solar Power Stations With Direct Steam Generation in the Solar Array" by Muller et al., and a document entitled "Second Law Analysis of a Solar Thermal Power System" by Kaushik et al. This preheating of the working fluid is costly, requiring additional mirrors and/or heliostats to heat the economizer panels.

Accordingly, a need exists for a less costly solution to maximize the preheating of the working fluid (e.g., the water and/or stream) to increase the overall efficiency of the solar thermal power plant.

### SUMMARY OF THE INVENTION

In one aspect of the present invention, a solar thermal power plant includes a steam generating portion having a steam drum and an evaporator. The steam drum separates water and steam. The evaporator receives the water from the steam drum to generate steam using solar energy provided thereto. The solar thermal power plant further includes a turbine that receives the steam from the steam generation portion. A plurality of extraction stages extracts steam from the turbine. A plurality of feedwater heaters receive steam from the steam extraction stages to heat feedwater provided by the turbine, wherein the heated feedwater is provided from the feedwater heaters directly to the steam drum of the steam generation portion.

In another aspect of the present invention, a method of operating a solar thermal power plant includes providing feedwater to a steam drum that separates water and steam. The method further provided water from the steam drum to an evaporator that receives the water from the steam drum to provide the steam. The method includes providing a turbine that receives the steam; and extracting steam from the turbine to provide the feedwater and to heat the feedwater. The method further includes receiving steam from the steam extraction stages to heat the feedwater provided by the turbine, wherein said heated feedwater is provided from the feedwater heaters directly to the steam drum of the steam generation portion.

### BRIEF DESCRIPTION OF THE DRAWINGS

Referring now to the Figure, which is an exemplary embodiment, and wherein like elements are numbered alike:
Figure 1 is a schematic diagram of a solar receiver portion of a solar power generation system in accordance with the present invention;
Figure 2 is a schematic representation of a solar power generation system employing a plurality of feedwater heaters to preheat water provided from a steam turbine, in accordance with the present invention; and
Figure 3 is a schematic representation of another embodiment of a solar power generation system employing a plurality of feedwater heaters to preheat water provided from a steam turbine, in accordance with the present invention.

### DETAILED DESCRIPTION OF PREFERRED EMBODIMENTS

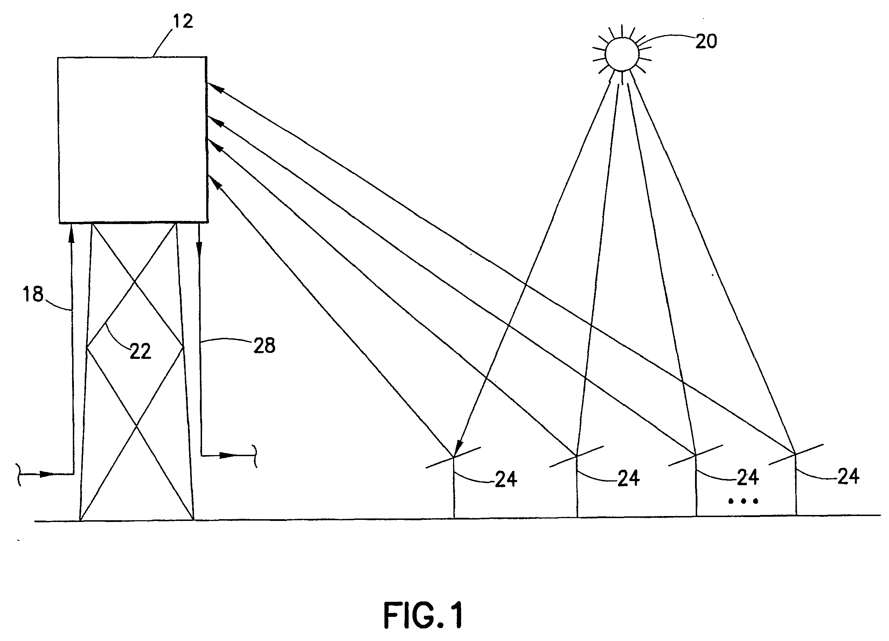

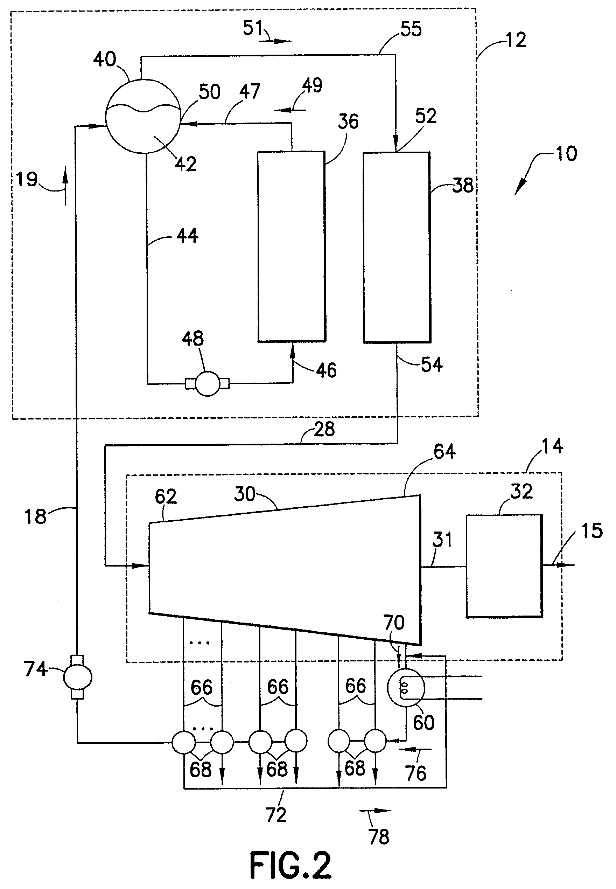

In one embodiment of the invention, a solar steam power generation system or solar thermal power plant 10 is shown in Figures 1 and 2, whereby water is heated in a steam generation portion or a solar receiver 12 to produce steam for rotating a steam turbine generator 14, which generates electricity 15. The solar receiver 12 comprises at least one panel of tubes (or tubing) 36, 38 that receives water (or other fluid) from an input pipe or conduit 18. As will be described in greater detail hereinafter, the solar receiver 12 may include a plurality of panels that perform different functions for transferring the radiant heat of the sun 20 to the water and/or steam flowing through the panel of tubes 36, 38.

As shown in Figure 1, the solar receiver 12 may be disposed on a tower 22 among a field of solar collectors 24, such as mirrors or heliostats. The solar collectors 24 are arranged proximate the tower for directing solar energy or solar radiation from the sun 20 to the solar receiver 12. The heliostats 24 may have a curved or flat configuration. Each heliostat can be independently adjustable in response to the relative position of the sun. For example, the heliostats can be arranged in arrays, whereby the heliostats of each array being controlled separately or in combination with the other heliostats of the array by one or more control devices (not shown) configured to detect and track the relative position of the sun. Thus, the heliostats 24 can adjust according to the position of the sun 20 to reflect sunlight onto the solar receiver 12, thereby warming the working fluid, e.g., water and/or steam, in the receiver. While a tower-based solar receiver 12 is shown, the invention contemplates that the solar receiver 12 may be disposed in a trough, similar to trough-based solar receiver designs know in the art.

As shown in Figure 1, the heliostats 24 direct the solar radiation of the sun 20 onto the solar receiver 12, and more specifically onto the panel of tubes 36, 38 having water and/or steam flowing therethrough. The radiant heat increases the temperature of the water flowing therethrough to generate high temperature steam. The steam is then provided to the power generation system 14, e.g. turbine generator, via the output pipe or conduit 28. Specifically, as shown in Figure 2, the steam is provided to a steam turbine 30, which powers a generator 32 to produce electricity 15, which will described in greater detail hereinafter.

Figure 2 schematically illustrates the solar power generation plant 10 of the present invention, whereby the solar receiver 12 is shown in greater detail. As shown, the solar receiver comprises two primary components: an evaporator 36 and a superheater 38. Each of these components comprises at least one panel of at least one tube that receives water and functions to increase the temperature of the water flowing through the respective tubes. Typically, each component 36, 38 includes a plurality of panels, whereby each panel includes a plurality of tubes.

The solar receiver 12 receives recycled water and/or steam from the steam turbine 30 via input pipe 18. A steam drum 40 receives the water and/or steam 19 from the input pipe 18. In the steam drum, the incoming water is distributed along the entire length of the drum by the water distribution header (not shown). Nozzles (not shown) in the distribution headers direct the incoming water in the downward direction in order to minimize turbulence and aid in circulation. The received water and/or steam 19 mixes with the water 42 in the drum 40 and is directed to the downcomers 44, e.g., pipes or tubes. The downcomers 44 originate at the steam drum 40 and terminate at the evaporator inlet 46, directing the water 42 to the evaporator 36.

A circulating pump 48 pumps the recirculated water 42 from the steam drum 40 disposed at the top of the evaporator panel(s) (i.e., the water wall) to the bottom inlet 46 of the evaporator panel(s). This circulating pump 48 provides a constant flow of cooling water to the evaporator panel(s) for all load conditions. This permits rapid response to load changes.

The solar energy reflected from the mirrors and/or heliostat 24 of Figure 1 heats the evaporator 36 that heats or evaporates the water 42 passing through the evaporator to provide a saturated steam/water mixture 49. Saturated steam/water mixture 49 from the evaporator 36 via pipe 47 enters the steam drum 40 at 50, where the water and steam are separated.

From the steam drum 40, steam 51 is directed to the superheater 38 through the superheater inlet 52 via pipe 55 and then on to the superheater panels. The solar energy superheats the steam entering the superheater 38. From the superheater outlet 54, the steam is directed to the steam line 28. The superheater outlet is equipped with the following: safety valve, ERV and start-up vent, drain valves, motor operated stop valve, and pressure, flow, and temperature instrumentation (not shown).

The steam provided by the steam line 28 to the steam turbine 30 expands and rotates the turbine and the generator 32, thus producing electricity at 15. The steam exiting the turbine is condensed in a condenser 60 and the condensate is fed back to the input pipe/line 18 to the solar receiver 12. A feedwater pump 74 provides the condensed steam back to the steam drum 40 of the solar receiver 12.

As shown, the turbine 30 includes a high pressure end 62 and a low pressure end 64 having multiple stages therein at different pressures. The steam expands as it progresses through the turbine 14 from the high pressure end 62 to the low pressure end 64. In one exemplary embodiment, the progression of the steam through the turbine 14 drives blades or the like that rotate a turbine output shaft 31 that drives the generator 32.

In one embodiment, the turbine 12 includes a plurality of steam extraction stages 66 that provide steam to a plurality of feedwater heaters 68 at various pressure levels. The condensed steam 76 from the condenser 60 is fed through a plurality of feedwater heaters 68, whereby thermal energy is conducted from the steam of the extraction stages 66 to the condensed feedwater (e.g., condensed steam) 76 to heat the feedwater 18 to a maximum temperature as possible, which may be in a range of approximately -6,6°C to 10°C (20°F to 50°F) below the saturation temperature of the water 42 in the steam drum 40.

The turbine 30 may include approximately 6-9 extraction stages 66 and corresponding feedwater heaters 68. In one embodiment, at least one extraction stage 66 at the low pressure end 64 is fed directly to the condenser 60 and condensate 76 (e.g., condensed steam) from the condenser is provided to a plurality of feedwater heaters 68. Each of the remaining steam extraction stages 26 feed steam to the feedwater feeders 68. Each of the heaters 68 uses the provided steam to heat (e.g., in incremental stages) the condensed steam 76 as it is passed from the condenser 60 through the feedwater heaters 34 and is returned to the steam generating portion 12. In one embodiment, each feedwater heater 68 returns residual condensed steam 78 of each respective extraction stage 66 to the condenser 60 along a feedback conduit 72. The resulting condensate (e.g., preheated water and/or steam) is then fed from the feedwater heaters 68 to the steam generating portion 12 via the input pipe 18 to the steam drum 40.

Compared to conventional power plants, a solar thermal power plant, be it a trough or a tower design, is different. There is no combustion chamber, there are no products of combustion that require a heat recovery system and, therefore, the design can be optimized by shifting the economizer heating duty from the expensive heliostats/parabolic mirrors - receiver island to the steam turbine island. The present invention accomplishes this by providing an increased number of steam extraction stages 66 in a steam turbine 30 and the installation of additional feedwater heaters 68 (see Figure 2), thus eliminating the need for an economizer or preheater panel disposed in the solar receiver. The benefit of these additional extraction stages and feedwater heaters is improved steam turbine efficiency. Since the overall solar plant efficiency is proportional to the product of solar and steam turbine efficiencies, the overall solar plant efficiency will be higher by using the feedwater heaters 68 than it would be for a system that did not preheat the water provided to the steam drum 40. In addition, since the solar power plant will operate at higher efficiency, the quantity of expensive heliostats/parabolic mirrors can be reduced, the solar field for the heliostats/parabolic mirrors can be reduced also, and the tower and the receiver size can be decreased, consequently reducing the investment cost and the cost of electricity. The optimum feedwater temperature entering the solar receiver 12 depends on the operating pressure in the drum 40, evaporator circulation ratio, and permissible Net Positive Suction Head of the receiver circulating pump 74. For example, for a 15,2 MPa (2200 psi) operating pressure in the steam drum 40, the feedwater temperature entering the solar receiver can be increased from traditional 251°C - 260°C for a conventional boiler type power plant to as high as 321-330°C for a solar power generation plant in accordance with the present invention.

As one will appreciate, the embodiment of a solar generation system 10, shown in Figures 1 and 2, provides a single fluid cycle, whereby the solar receiver 12 functions as a boiler for directly evaporating the water and superheating the steam by the solar energy provided by the field of solar receivers 24.

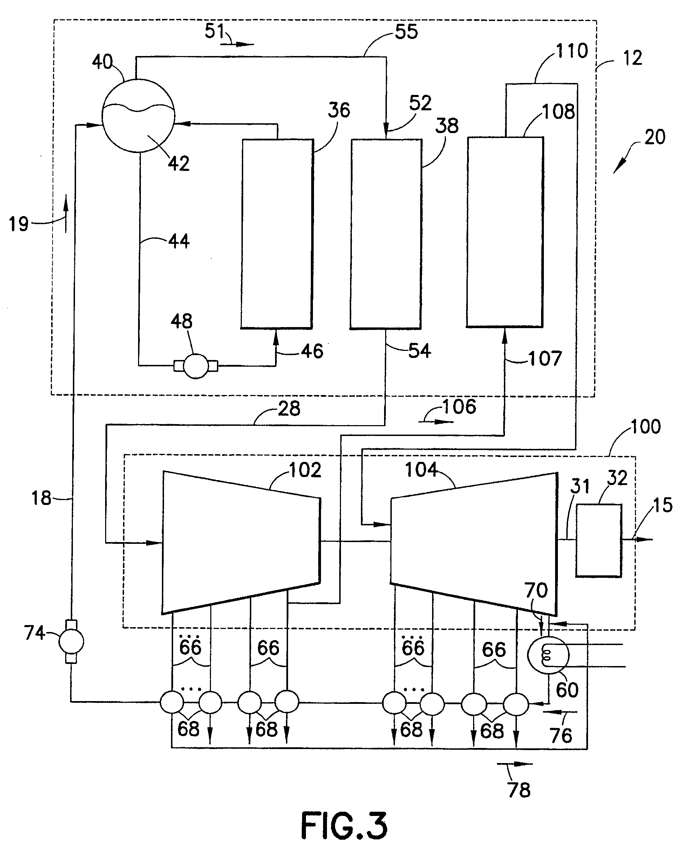

Referring to Figure 3, a solar steam power plant 20 embodying the present invention is shown, which is similar to the solar steam power plant 10 of Figure 1, wherein components having the same reference numerals are the same components and function in a similar manner as described hereinbefore. The solar steam power plant 20 includes steam power generator 100 having a high pressure steam turbine 102 and a low pressure steam turbine 104. The high pressure steam turbine 102 is driven by the superheated steam provided by the superheater 38 which is mechanically coupled to the low pressure steam turbine 104. The turbines 102,104 function similar to the turbine 30 described in Figure 2. As shown steam provided by the high pressure turbine 102 is used to rotate the low pressure turbine 104. The steam 106 from the high pressure turbine 102 is reheated before being provided to the low pressure turbine 104. The steam 106 is provided to a reheater 108 via input pipr or conduit 107. The reheater comprises at least one solar panel having a plurality of tubes for receiving the steam 106 to be reheated. The solar panel(s) of the reheater 108 is similar to the solar panels of the evaporator 36 and the superheater 38. The reheater 108 is disposed in the solar receiver 12 whereby radiant energy from the sun 20 reheats the steam 106 which is then provided to the low pressure turbine 104 through an output pipe or conduit 110. Preheating of the steam 106 from the high pressure turbine 102 increases the efficiency of the solar steam power plant 20. While the embodiment of Figure 3 includes a reheater 108, the present invention contemplates that the steam from the high pressure turbine 102 may be provided directly to the low pressure steam turbine 104, thus not requiring the reheater.

Similar to that described in U.S. Provisional Patent Application No. 61/045,361, which is incorporated herein by reference, the tubing in any of the solar panels, e.g., the evaporator 36, the superheater 38 and the reheater 108, may included tubes that have a rifled inner surface to increase the thermal transfer between the tubing and the water and/or steam flowing therethrough.

Furthermore, while the solar power generation system 10, shown in Figures 1 and 2, includes a super heater 38 provided to the solar receiver 12, the present invention contemplates that a super heater may not be necessary in other industrial applications, and therefore may be eliminated from the configuration of the solar receiver 12. This configuration without the super heater 38 contemplates that the radiant energy provided onto the panel(s) of the evaporator 36 is sufficient to heat the water and/or steam flowing therethrough to generate the desired amount and quality of steam for other industrial purposes know tone skilled in the art.

## Claims

1. A solar thermal power plant (10), comprising:
a steam generating portion, including,
a steam drum (40) that separates water (42) and steam (51); and
an evaporator (36) in fluid communication with the steam drum (40), the evaporator (36) receiving a flow of water (42) from the steam drum (40) to provide the steam (51) using solar energy provided thereto,
a turbine (14) that receives the steam (51) from the steam generation portion;
a plurality of extraction stages (66) to extract steam (51) from the turbine (14); and
a plurality of feedwater heaters (68) receiving steam (51) from the steam extraction stages (66) to heat feedwater (19) provided by the turbine (14), **characterised by** heated feedwater (19) being provided from the feedwater heaters (68) directly to the steam drum (40) of the steam generation portion.

2. The solar thermal power plant (10) of claim 1, further comprising a super heater (38) for heating the steam (51) provided by the evaporator (36), wherein the super heated steam (51) is provided to the turbine (14).

3. The solar thermal power plant (10) of claim 1, further comprising a condenser (60) coupled to one of the extraction stages (66), the output of the condenser (60) providing at least a portion of the feedwater (19).

4. The solar thermal power plant (10) of claim 1, further including one or more solar receiving devices (12), wherein the evaporator (36) receives solar radiant energy from the solar receiving devices (12) and transfers heat to the water (42).

5. The solar thermal power plant (10) of claim 2, wherein the super heater (38) receives the solar radiant energy from solar receiving devices (12) and transfers heat to the steam (51).

6. The solar thermal power plant (10) of claim 1, wherein the turbine (14) is operatively coupled to a generator (32) that converts rotational motion of a turbine output shaft (31) to electrical energy (15).

7. The solar thermal power plant (10) of claim 1, further comprising a conduit (72) for providing condensed steam (78) from at least one feedwater heater (68) to the condenser (60).

8. The solar thermal power plant (10) of claim 1 the powerplant being configured that the temperature of the feedwater (19) exiting the feedwater heaters (68) is within the range of approximately -6,6°C to 10°C (20 F degrees to 50 F degrees) below the saturation temperature of the water (42) in the steam drum (40).

9. The solar thermal power plant (10) of claim 1, wherein the steam generating portion includes at least six feedwater heaters (68).

10. The solar thermal power plant (10) of claim 1, wherein the steam generating portion further includes a reheater (108) formed of a panel of tubes that reheats steam from a first turbine (102) and provides the reheated steam (106) to a second turbine (104).

11. A method of operating a solar thermal power plant (10), comprising:
providing feedwater (19) to a steam drum (40) that separates water (42) and steam (51);
providing water (42) from the steam drum (40) to an evaporator (36) to generate steam (51),
providing a turbine (14) that receives the steam (51);
extracting steam (51) from the turbine (14) and condensing the extracted steam (51) into the feedwater (19) and heating the feedwater (19) in feedwater heaters (68); and
receiving steam (51) from the steam extraction stages (66) to heat the feedwater (19) provided by the turbine (14), **characterised by** heated feedwater (19) being provided from said feedwater heaters (68) directly to the steam drum (40) of the steam generation portion.

12. The method of claim 11, further comprising heating the steam (49) provided by the evaporator (36), wherein the super heated steam (51) is provided to the turbine (14).

13. The method of claim 11, further comprising condensing the steam (51) provided by the turbine (14) to provide the feedwater (19).

14. The method of claim 11, further comprising providing solar energy to the evaporator (36) to generate steam (51) from the water (42).

15. The method of claim 12, further comprising providing solar energy to super heat the steam (49) generated by the evaporator (36).

16. The method of claim 11, wherein the turbine (14) is operatively coupled to a generator (32) that converts rotational motion of a turbine output shaft (31) to electrical energy (15).

17. The method of claim 11, further comprising providing condensed steam (78) from a feedwater heater (68) to the condenser (60).

18. The method of claim 11, wherein the temperature of the feedwater (19) exiting the feedwater heaters (68) is within the range of approximately -6,6°C to 10°C (20 F degrees to 50 F degrees) below the saturation temperature of the water (42) in the steam drum (40).

## Patentansprüche

1. Solarthermisches Kraftwerk (10), das Folgendes umfasst:
einen Dampferzeugungsabschnitt, der
eine Dampftrommel (40), die Wasser (42) und Dampf (51) trennt, und
einen Verdampfer (36) in fluidtechnischer Verbindung mit der Dampftrommel (40) aufweist, wobei der Verdampfer (36) einen Wasserstrom (42) von der Dampftrommel (40) empfängt, um den Dampf (51) unter Verwenden von Solarenergie, die ihm bereitgestellt wird, bereitzustellen,
eine Turbine (14), die den Dampf (51) von dem Dampferzeugungsabschnitt empfängt,
mehrere Extraktionsstufen (66), um Dampf (51) aus der Turbine (14) zu extrahieren, und
mehrere Speisewassererhitzer (68), die Dampf (51) von den Dampfextraktionsstufen (66) empfangen, um Speisewasser (19) zu erhitzen, das von der Turbine (14) bereitgestellt wird, **dadurch gekennzeichnet, dass** das erhitzte Speisewasser (19) von den Speisewassererhitzern (68) direkt zu der Dampftrommel (40) des Dampferzeugungsabschnitts bereitgestellt wird.

2. Solarthermisches Kraftwerk (10) nach Anspruch 1, das ferner einen Überhitzer (38) zum Erhitzen des Dampfs (51), der von dem Verdampfer (36) geliefert wird, umfasst, wobei der überhitzte Dampf (51) der Turbine (14) bereitgestellt wird.

3. Solarthermisches Kraftwerk (10) nach Anspruch 1, das ferner einen Kondensator (60) umfasst, der mit einer der Extraktionsstufen (66) gekoppelt ist, wobei der Ausgang des Kondensators (60) mindestens einen Teil des Speisewassers (19) bereitstellt.

4. Solarthermisches Kraftwerk (10) nach Anspruch 1, das ferner eine oder mehrere Solarempfangsvorrichtungen (12) aufweist, wobei der Verdampfer (36) Solarstrahlenenergie von den Solarempfangsvorrichtungen (12) empfängt und Hitze auf das Wasser (42) überträgt.

5. Solarthermisches Kraftwerk (10) nach Anspruch 2, wobei der Überhitzer (38) die Solarstrahlenenergie von den Solarempfangsvorrichtungen (12) empfängt und Hitze auf den Dampf (51) überträgt.

6. Solarthermisches Kraftwerk (10) nach Anspruch 1, wobei die Turbine (14) betrieblich mit einem Generator (32), der Drehbewegung einer Turbinenausgangswelle (31) in elektrische Energie (15) umwandelt, gekoppelt ist.

7. Solarthermisches Kraftwerk (10) nach Anspruch 1, das ferner eine Leitung (72) umfasst, um kondensierten Dampf (78) von mindestens einem Speisewassererhitzer (68) zu dem Kondensator (60) bereitzustellen.

8. Solarthermisches Kraftwerk (10) nach Anspruch 1, wobei das Kraftwerk ausgelegt ist, dass die Temperatur des Speisewassers (19), das aus den Speisewassererhitzern (68) austritt, innerhalb des Bereichs von etwa -6,6 °C bis 10 °C (20 °F bis 50 °F) unterhalb der Sättigungstemperatur des Wassers (42) in der Dampftrommel (40) liegt.

9. Solarthermisches Kraftwerk (10) nach Anspruch 1, wobei der Dampferzeugungsabschnitt mindestens sechs Speisewassererhitzer (68) aufweist.

10. Solarthermisches Kraftwerk (10) nach Anspruch 1, wobei der Dampferzeugungsabschnitt ferner einen Wiedererhitzer (108) aufweist, der aus einem Paneel von Röhren gebildet ist, das Dampf von einer ersten Turbine (102) wieder erhitzt und den wieder erhitzten Dampf (106) zu einer zweiten Turbine (104) bereitstellt.

11. Verfahren zum Betreiben eines solarthermischen Kraftwerks (10), das Folgendes umfasst:
Bereitstellen von Speisewasser (19) zu einer Dampftrommel (40), die Wasser (42) und Dampf (51) trennt,
Bereitstellen von Wasser (42) von der Dampftrommel (40) zu einem Verdampfer (36), um Dampf (51) zu erzeugen,
Bereitstellen einer Turbine (14), die den Dampf (51) empfängt,
Extrahieren von Dampf (51) von der Turbine (14) und Kondensieren des extrahierten Dampfs (51) in das Speisewasser (19) und Erhitzen des Speisewassers (19) in Speisewassererhitzern (68), und
Empfangen von Dampf (51) von den Dampfextraktionsstufen (66), um das Speisewasser (19), das von der Turbine (14) bereitgestellt wird, zu erhitzen, **dadurch gekennzeichnet, dass** das erhitzte Speisewasser (19) von den Speisewassererhitzern (68) direkt zu der Dampftrommel (40) des Dampferzeugungsabschnitts bereitgestellt wird.

12. Verfahren nach Anspruch 11, das ferner das Erhitzen des Dampfs (49), der von dem Verdampfer (36) bereitgestellt wird, umfasst, wobei der überhitzte Dampf (51) zu der Turbine (14) bereitgestellt wird.

13. Verfahren nach Anspruch 11, das ferner das Kondensieren des Dampfs (51), der von der Turbine (14) bereitgestellt wird, umfasst, um das Speisewasser (19) bereitzustellen.

14. Verfahren nach Anspruch 11, das ferner das Bereitstellen von Solarenergie zu dem Verdampfer (36) umfasst, um Dampf (51) aus dem Wasser (42) zu erzeugen.

15. Verfahren nach Anspruch 12, das ferner das Bereitstellen von Solarenergie zum Überhitzen des Dampfs (49), der von dem Verdampfer (36) erzeugt wird, umfasst.

16. Verfahren nach Anspruch 11, wobei die Turbine (14) betrieblich mit einem Generator (32) gekoppelt ist, der Drehbewegung der Turbinenausgangswelle (31) in elektrische Energie (15) umwandelt.

17. Verfahren nach Anspruch 11, das ferner das Bereitstellen kondensierten Dampfs (78) von einem Speisewassererhitzer (68) zu dem Kondensator (60) umfasst.

18. Verfahren nach Anspruch 11, wobei die Temperatur des Speisewassers (19), das aus den Speisewassererhitzern (68) austritt, innerhalb des Bereichs von etwa -6,6 °C bis 10 °C (20 °F bis 50 °F) unter der Sättigungstemperatur des Wassers (42) in der Dampftrommel (40) liegt.

## Revendications

1. Centrale thermique solaire (10), comprenant :
une partie génératrice de vapeur, comportant :
un ballon à vapeur (40) qui sépare l'eau (42) et la vapeur (51); et
un évaporateur (36) en communication fluidique avec le ballon à vapeur (40), l'évaporateur (36) recevant un débit d'eau (42) provenant du ballon à vapeur (40) pour produire la vapeur (51) en utilisant l'énergie solaire qui lui est fournie,
une turbine (14) qui reçoit la vapeur (51) provenant de la partie génératrice de vapeur ;
une pluralité d'étages d'extraction (66) destinés à extraire de la vapeur (51) de la turbine (14); et
une pluralité de réchauffeurs d'eau d'alimentation (68) recevant de la vapeur (51) provenant des étages d'extraction de vapeur (66) pour réchauffer l'eau d'alimentation (19) fournie par la turbine (14), **caractérisée en ce que** ladite eau d'alimentation réchauffée (19) est fournie à partir des réchauffeurs d'eau d'alimentation (68) directement au ballon à vapeur (40) de la partie génératrice de vapeur.

2. Centrale thermique solaire (10) selon la revendication 1, comprenant en outre un surchauffeur (38) conçu pour chauffer la vapeur (51) fournie par l'évaporateur (36), la vapeur surchauffée (51) étant fournie à la turbine (14).

3. Centrale thermique solaire (10) selon la revendication 1, comprenant en outre un condenseur (60) associé à un des étages d'extraction (66), la sortie du condenseur (60) fournissant une partie au moins de l'eau d'alimentation (19).

4. Centrale thermique solaire (10) selon la revendication 1, comportant en outre un ou plusieurs dispositifs récepteurs solaires (12), l'évaporateur (36) recevant de l'énergie solaire rayonnante provenant des dispositifs récepteurs solaires (12) et transférant de la chaleur à l'eau (42).

5. Centrale thermique solaire (10) selon la revendication 2, le surchauffeur (38) recevant l'énergie solaire rayonnante provenant de dispositifs récepteurs solaires (12) et transférant de la chaleur à la vapeur (51).

6. Centrale thermique solaire (10) selon la revendication 1, la turbine (14) étant associée de façon fonctionnelle à un générateur (32) qui convertit le mouvement de rotation d'un arbre de sortie (31) de la turbine en énergie électrique (15).

7. Centrale thermique solaire (10) selon la revendication 1, comprenant en outre un conduit (72) destiné à amener de la vapeur condensée (78) d'au moins un réchauffeur d'eau d'alimentation (68) au condenseur (60).

8. Centrale thermique solaire (10) selon la revendication 1, la centrale thermique étant configurée de telle sorte que la température de l'eau d'alimentation (19) sortant des réchauffeurs d'eau d'alimentation (68) soit environ entre -6,6°C et 10°C (20°F et 50°F) inférieure à la température de saturation de l'eau (42) dans le ballon à vapeur (40).

9. Centrale thermique solaire (10) selon la revendication 1, la partie génératrice de vapeur comportant au moins six réchauffeurs d'eau d'alimentation (68).

10. Centrale thermique solaire (10) selon la revendication 1, la partie génératrice de vapeur comportant en outre un resurchauffeur (108) formé d'un panneau de tubes qui resurchauffe de la vapeur provenant d'une première turbine (102) et fournit la vapeur resurchauffée (106) à une seconde turbine (104).

11. Procédé d'exploitation d'une centrale thermique solaire (10), comprenant les étapes consistant à :
fournir de l'eau d'alimentation (19) à un ballon à vapeur (40) qui sépare l'eau (42) et la vapeur (51) ;
fournir de l'eau (42) provenant du ballon à vapeur (40) à un évaporateur (36) pour produire de la vapeur (51);
utiliser une turbine (14) qui reçoit la vapeur (51) ;
extraire de la vapeur (51) de la turbine (14) et condenser la vapeur extraite (51) dans l'eau d'alimentation (19) et réchauffer l'eau d'alimentation (19) dans des réchauffeurs d'eau d'alimentation (68); et
recevoir de la vapeur (51) provenant des étages d'extraction de vapeur (66) pour réchauffer l'eau d'alimentation (19) fournie par la turbine (14), **caractérisé en ce que** ladite eau d'alimentation réchauffée (19) est fournie à partir desdits réchauffeurs d'eau d'alimentation (68) directement au ballon à vapeur (40) de la partie génératrice de vapeur.

12. Procédé selon la revendication 11, comprenant en outre l'étape consistant à chauffer la vapeur (49) fournie par l'évaporateur (36), la vapeur surchauffée (51) étant fournie à la turbine (14).

13. Procédé selon la revendication 11, comprenant en outre l'étape consistant à condenser la vapeur (51) fournie par la turbine (14) pour produire l'eau d'alimentation (19).

14. Procédé selon la revendication 11, comprenant en outre l'étape consistant à fournir de l'énergie solaire à l'évaporateur (36) pour générer de la vapeur (51) à partir de l'eau (42).

15. Procédé selon la revendication 12, comprenant en outre l'étape consistant à fournir de l'énergie solaire pour surchauffer la vapeur (49) générée par l'évaporateur (36).

16. Procédé selon la revendication 11, la turbine (14) étant associée de façon fonctionnelle à un générateur (32) qui convertit le mouvement de rotation d'un arbre de sortie (31) de la turbine en énergie électrique (15).

17. Procédé selon la revendication 11, comprenant en outre l'étape consistant à amener de la vapeur condensée (78) d'un réchauffeur d'eau d'alimentation (68) au condenseur (60).

18. Procédé selon la revendication 11, la température de l'eau d'alimentation (19) sortant des réchauffeurs d'eau d'alimentation (68) étant environ entre -6,6°C et 10°C (20°F et 50°F) inférieure à la température de saturation de l'eau (42) dans le ballon à vapeur (40).
